# EUROPÄISCHE PATENTANMELDUNG

(11) **EP 0 982 824 A1**
(43) Veröffentlichungstag der Anmeldung: **01.03.2000**
(21) Anmeldenummer: 99114116.9
(22) Anmeldetag: 16.07.1999
(51) Int. Cl.: H02G 3/18

(54) **Befestigungsanordnung für einen Geräteeinsatz**

(30) Priorität: 21.08.1998 DE 29815008 U
(71) Anmelder: Albert Ackermann GmbH & Co. KG, 51643 Gummersbach (DE)
(72) Erfinder: Mellies, Nils-Ove, 51674 Wiehl (DE)
(74) Vertreter: Wilhelm & Dauster Patentanwälte European Patent Attorneys

(57) **Zusammenfassung**

Befestigungsanordnung für einen Geräteeinsatz mit einem Teppichanlegerahmen, der in eine Öffnung in einer Doppelbodenplatte (1) einsetzbar und dadurch gekennzeichnet ist, daß am Geräteeinsatz (4) Befestigungsstellen (11) zur Anordnung an einer Montageplatte (6) vorgesehen sind, die mit ihrem Rand (13) mindestens teilweise in einen in der Leibung der Öffnung (3) der Doppelbodenplatte (1) vorgesehenen Schlitz (5) eingreift.

## Beschreibung

Die Erfindung betrifft eine Befestigungsanordnung für einen Geräteeinsatz mit einem Teppichanlegerahmen, der in eine Öffnung in einer Doppelbodenplatte einsetzbar ist.

Geräteeinsätze dieser Art sind bekannt (Katalog teliflur Systemkomponenten für den Doppelboden der Firma Albert Ackermann GmbH & Co. KG, Gummersbach, Druckvermerk 01.97/54/01/8.000). Diese Geräteeinsätze sind mit einem Teppichschutzrahmen versehen, der über die Einbauöffnung im Doppelboden nach außen vorsteht, und daher einen Teil des Teppichbodens übergreift. Am Geräteeinsatz selbst werden Befestigungswinkel mit Hilfen von Schrauben angebracht, die sich an der Unterseite der Doppelbodenplatte anlegen und so den Rand der Öffnung in der Doppelbodenplatte zwischen Teppichschutzrahmen und dem angelegten Winkelteil einspannen.

Da es teilweise aus ästhetischen Gründen gewünscht ist, daß der Teppichboden nicht von einem Rand eines Teppichschutzrahmens übergriffen wird, sondern daß an der Stelle der Einbauöffnung - so wie bei anderen Unterflurintallationen bekannt - nur die obere Kante eines von der Innenseite der Einbauöffnung hochstehenden Rahmen sichtbar ist, ist es die Aufgabe der vorliegenden Erfindung, auch für Geräteeinsätze, die in Doppelböden einbaubar sind, eine Lösung für eine solche Ausgestaltung zu finden.

Mit der Erfindung wird für eine Befestigungsanordnung für einen Geräteeinsatz der eigangs genannten Art vorgesehen, daß am Geräteeinsatz Befestigungsstellen zur Anordnung an einer Montageplatte vorgesehen sind, die mit Ihrem Rand mindestens teilweise in einen in der Leibung der Öffnung vorgesehenen Schlitz der Doppelbodenplatte eingreift. Durch diese Ausgestaltung wird eine vollkommen andere Art der Befestigung geschaffen, bei der es nicht mehr darauf ankommt, daß der Geräteeinsatz zwischen einem dem Teppichboden übergreifenden Rand des Teppichschutzrahmens und einem Befestigungswinkel eingeklemmt ist. Der Teppichschutzrahmen kann daher bei dieser Ausführungsform, wie an sich bei anderen Unterflurinstallationen bekannt - als ein in der Höhe des Teppichbodens endender Rahmen ausgebildet sein.

In Weiterbildung der Erfindung kann die Montageplatte als eine rechteckige oder quadratische Platte ausgebildet sein, die eine den Außenabmessungen des Geräteeinsatzes angepaßte Öffnung mit seitlich herreinragenden Laschen aufweist. Diese Laschen können mit Bohrungen zum Einsetzen von Schrauben versehen sein, die im Geräteeinsatz gehalten sind.

In Weiterbildung der Erfindung kann der Rand der Montageplatte schließlich unmittelbar bei der Herstellung der Doppelbodenplatte, beispielsweise einer Betonplatte, in dieser verankert, beispielsweise mit eingegossen werden. Der Rand der Montageplatte wird daher zweckmäßig mit Öffnungen zum Vergießen in einer Doppelbodenplatte aus Beton versehen.

Die Erfindung ist anhand eines Ausführungsbeispieles in der Zeichnung dargestellt und wird im folgenden erläutert. Es zeigen:
- Fig. 1: die schematische Darstellung eines Schnittes durch den Rand einer Öffnung in einer Doppelbodenplatte mit einem erfindungsgemäß befestigten Geräteeinsatz und
- Fig. 2: die - verkleinerte - Draufsicht auf die zur Befestigung des Geräteeinsatzes nach Fig. 1 verwendete Montageplatte.

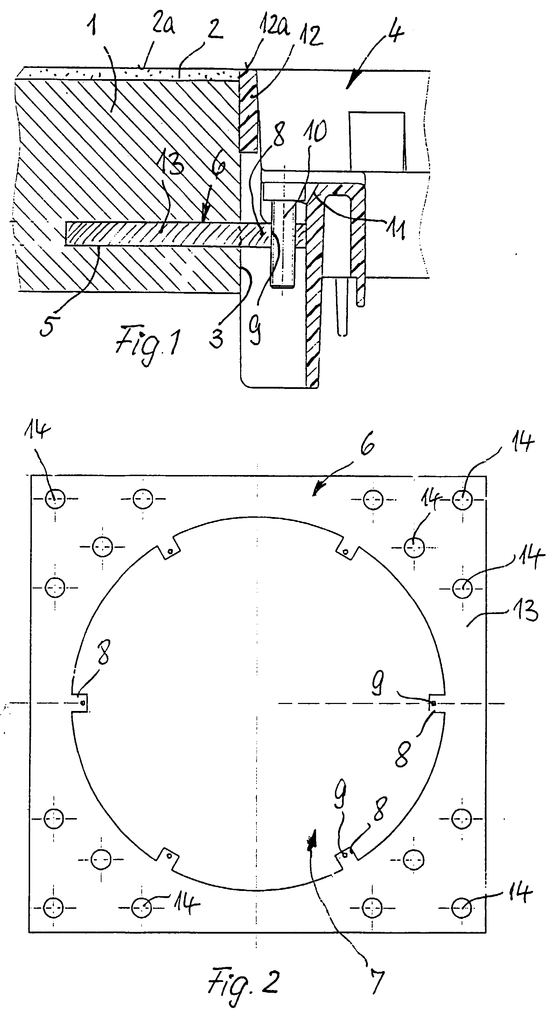

Die Fig. 1 zeigt eine Doppelbodenplatte 1, die beispielsweise aus Beton hergestellt ist, und in nicht näher, weil bekannter Weise mit Hilfe von Stützfüßen auf einer darunterliegenden, nicht gezeigten Decke gehalten wird, so daß unter der Betonplatte 1 ein Hohlraum zur Verlegung von Elektroinstallationen entsteht.

Die Doppelbodenplatte 1 ist oben mit einem Teppichbodenbelag 2 und mit einer Einbauöffnung für einen Geräteeinsatz 4 versehen, von der nur eine Wand 3 gezeigt ist. Diese Wand 3 verläuft rings um den Geräteeinsatz 4. Ihre Leibung ist mit einem parallel zu der Oberkante der Betonplatte 1 verlaufenden Schlitz 5 versehen, und in diesen Schlitz ist eine Montageplatte 6, die im einzelnen in Fig. 2 gezeigt ist, mit ihrem Außenrand eingesetzt. Wie die Fig. 2 zeigt, besitzt die Montageplatte 6 eine mittlere Öffnung 7, die den Außenabmessungen des Geräteeinsatzes 4 angepaßt ist. In diese Öffnung 7 herein ragen beim Ausführungsbeispiel sechs Laschen 8, die alle mit Bohrungen 9 zum Einsetzen von Schrauben 10 versehen sind, die in Fig. 1 erkennbar und entsprechenden Aufnahmeteilen 11 des Geräteeinsatzes zugeordnet sind. Der Geräteeinsatz 4 selbst, der in bekannter Weise aus Kunststoff bestehen kann, besitzt einen einstückig angeformten, als Teppichanlegerahmen dienenden Rahmen 12, der beim Ausführungsbeispiel kreisringförmig ausgebildet ist, und dessen Oberkante 12a mit der Oberkante 2a des Teppichbodens 2 fluchtet. Der Geräteeinsatz 4 ist im übrigen in bekannter Weise beispielsweise zur Aufnahme von einsetzbaren Gerätebechern ausgestaltet, die mit Installationsgeräten bestückt werden, deren Anschlüsse aus dem Hohlraum unterhalb der Doppelbodenplatte erfolgen.

Die Fig. 2 läßt schließlich noch erkennen, daß die Montageplatte 6 in dem in dem Schlitz 5 der Doppelbodenplatte 1 gehaltenen Randbereich 13 mit mehreren Öffnungen 14 versehen ist, die der Befestigung der Montageplatte 6 innerhalb der Doppelbodenplatte dienen, wenn die Montageplatte 6 mit der beispielsweise aus Beton hergestellten Doppelbodenplatte 1 vergossen ist.

Geräteeinsätze für den Einbau in Doppelböden können daher durch die erfindungsgemäße Ausgestaltung in beliebiger Weise mit Teppichanlegerahmen ausgestattet werden. Ein überstehender Rand für die Befestigung, wie er bei Teppichschutzrahmen aus dem Stand der Technik bekannt ist, wird überflüssig.

## Patentansprüche

1. Befestigungsanordnung für einen Geräteeinsatz mit einem Teppichanlegerahmen, der in eine Öffnung in einer Doppelbodenplatte (1) einsetzbar ist, dadurch gekennzeichnet, daß am Geräteeinsatz (4) Befestigungsstellen (11) zur Anordnung an einer Montageplatte (6) vorgesehen sind, die mit ihrem Rand (13) mindestens teilweise in einen in der Leibung der Öffnung (3) der Doppelbodenplatte (1) vorgesehenen Schlitz (5) eingreift.

2. Befestigungsanordnung nach Anspruch 1, dadurch gekennzeichnet, daß der Teppichanlegerahmen als ein in der Höhe des Teppichbodens (2) endender Rahmen (12) ausgebildet ist.

3. Befestigungsanordnung nach Anspruch 1 oder 2, dadurch gekennzeichnet, daß die Montageplatte eine rechteckige oder quadratische Platte (6) ist, die eine den Außenabmessungen des Geräteeinsatzes angepaßte Öffnung (7) mit seitlich hereinragenden Laschen (8) aufweist.

4. Befestigungsanordnung nach Anspruch 3, dadurch gekennzeichnet, daß die Laschen (8) mit Bohrungen (9) zum Einsetzen von Schrauben (10) versehen sind, die im Geräteeinsatz (4) gehalten sind.

5. Befestigungsanordnung nach einem der vorhergehenden Ansprüche, dadurch gekennzeichnet, daß der Rand (13) der Montageplatte (6) mit Öffnungen (14) zum Vergießen in einer Doppelbodenplatten (1) aus Beton oder dergleichen versehen ist.
